# EUROPEAN PATENT APPLICATION

(11) **EP 2 871 702 A1**
(43) Date of publication of application: **13.05.2015**
(21) Application number: 14275227.8
(22) Date of filing: 10.11.2014
(51) Int. Cl.: H01M 10/42, H01M 10/46, H02J 7/00

(54) **Battery package and electronic device having the same**

(30) Priority: 11.11.2013 KR 20130136578; 03.06.2014 KR 20140067384
(71) Applicant: Samsung Electro-Mechanics Co., Ltd., Gyeonggi-do (KR)
(72) Inventor: Han, Chang Mok, Gyeonggi-Do (KR); Kim, Ji Hoon, Gyeonggi-Do (KR); Lee, Sang Beom, Gyeonggi-Do (KR); Park, Seung Won, Gyeonggi-Do (KR); Cho, Hyung Wook, Gyeonggi-Do (KR); Chang, Ki Won, Gyeonggi-Do (KR); Sung, Jae Suk, Gyeonggi-Do (KR); Park, Sung Heum, Gyeonggi-Do (KR)
(74) Representative: Potter Clarkson LLP

(57) **Abstract**

There is provided an electronic device including: a power-receiving unit receiving power by a contactless scheme; a battery package including a battery cell charged with the power delivered from the power-receiving unit; and an electronic device main body receiving the power from the battery package to perform a set operation.

## Description

### CROSS-REFERENCE TO RELATED APPLICATION

This application claims the benefit of Korean Patent Application Nos. 10-2013-0136578 filed on November 11, 2013 and 10-2014-0067384 filed on June 3, 2014, with the Korean Intellectual Property Office, the disclosures of which are incorporated herein by reference.

### BACKGROUND

The present disclosure relates to a battery package charging power in a battery cell and an electronic device having the same.

In order for an electronic device to receive power from the outside, a power supply is used to supply power from an external power source to the electronic device. For portability, mobility, and the like of the electronic device, a battery package is installed inside the electronic device to charge power from the power supply and supply the charged power to circuits inside the electronic device.

Like the prior art described in the following Related Art Document, using a power supply supplying power to an electronic device by a contactless scheme due to various advantages for use is a growing trend. But, a general method is either holding an electronic device or a battery package using a separate device such as a cradle and delivering power, which has been supplied from a power supply by a contactless scheme, to the battery package by a contact scheme, or installing a separate power-receiving device in an electronic device and delivering power, which has been supplied from a power supply by a contactless scheme, to a battery package by a contact scheme.

### [Related Art Document]

### [Patent Document]

(Patent Document 1) Korean Patent Laid-Open Publication No. 10-2012-0136725

### SUMMARY

An aspect of the present disclosure may provide a battery package receiving power by a contactless scheme and an electronic device having the same.

According to an aspect of the present disclosure, an electronic device may include a battery package including a power-receiving unit by a contactless scheme and a battery cell charged with the power delivered from the power-receiving unit, and an electronic device main body receiving power from the battery package to perform a set operation.

The battery package may further include a terminal unit through which voltage information of the battery cell and power status information related to a status of the power received by the power-receiving unit are input and output, and the terminal unit may include: a positive (+) voltage terminal and a negative (-) voltage terminal through which the voltage information of the battery cell is output; a power status information terminal through which the power status information is output; an NFC terminal electrically connected to an NFC antenna to input and output a communication signal; and a battery identification (ID) terminal through which electrical characteristics information is output.

The power status information terminal may share a ground with the negative (-) voltage terminal.

The power-receiving unit may include a power-receiving coil receiving power by the contactless scheme and a power-receiving circuit converting the power received by the power-receiving coil into charging power to charge the battery cell, and the battery package may further include a near field communication (NFC) antenna performing near field communications.

The electronic device main body may further include a control unit receiving charging status information to control an operation of a charging control unit or receiving the power status information to control a charging status of the battery cell.

### BRIEF DESCRIPTION OF DRAWINGS

The above and other aspects, features and advantages of the present disclosure will be more clearly understood from the following detailed description taken in conjunction with the accompanying drawings, in which:
FIG. 1 is an exploded perspective view of an electronic device according to an exemplary embodiment of the present disclosure;
FIG. 2 is a schematic configuration diagram of a battery package according to the exemplary embodiment of the present disclosure;
FIG. 3 is a schematic block diagram of the electronic device and the battery package according to the exemplary embodiment of the present disclosure;
FIG. 4 is a diagram illustrating the configuration of a battery terminal unit according to the exemplary embodiment of the present disclosure;
FIG. 5 is a schematic block diagram of an electronic device and a battery package according to another exemplary embodiment of the present disclosure; and
FIG. 6 is a diagram illustrating the configuration of a battery terminal unit according to the exemplary embodiment of the present disclosure.

### DETAILED DESCRIPTION

Exemplary embodiments of the present disclosure will be described in detail with reference to the accompanying drawings so that those skilled in the art may easily practice the present disclosure.

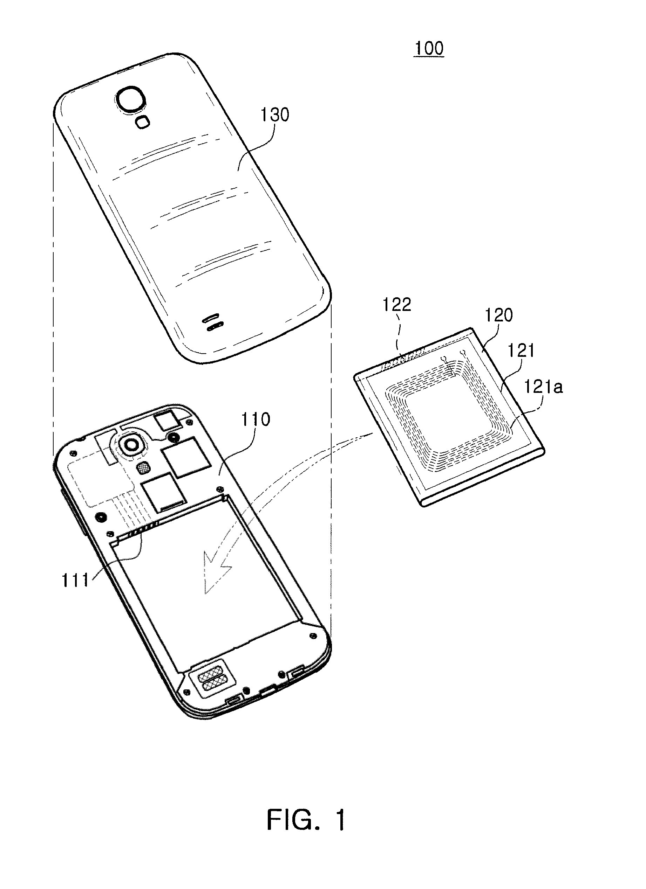

FIG. 1 is an exploded perspective view of an electronic device according to an exemplary embodiment of the present disclosure.

Referring to FIG. 1, an electronic device 100 according to the exemplary embodiment of the present disclosure may include an electronic device main body 110 and a battery package 120 that is installed in one area of the electronic device main body 110.

In a case in which the battery package 120 is received in a receiving area of a rear surface of the electronic device main body 110, an electronic device cover 130 may be coupled to the rear surface of the electronic device main body 110.

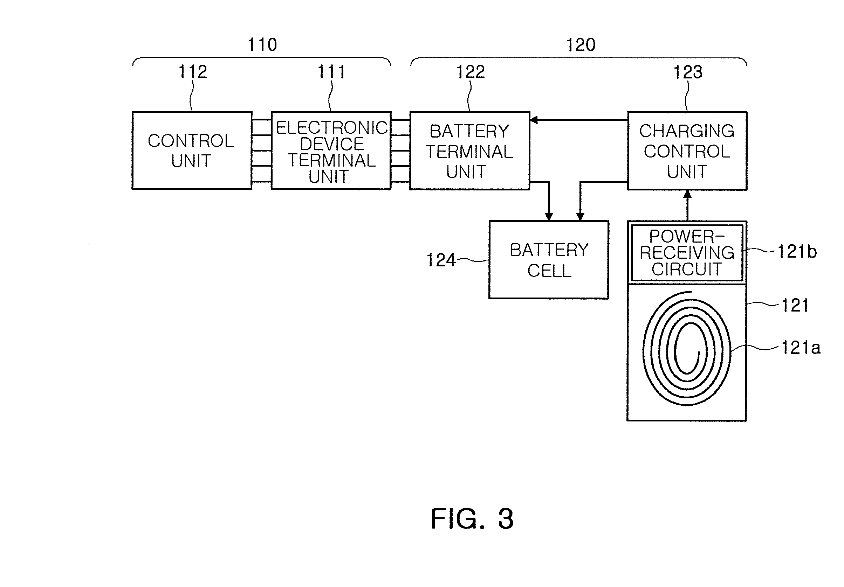

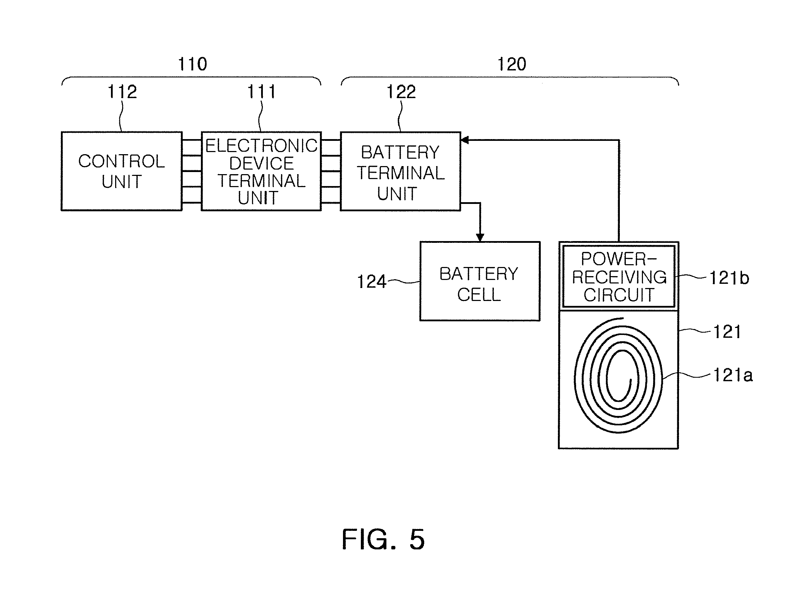

The battery package 120 may include a power-receiving unit 121 receiving power by a contactless scheme, and a terminal unit 122 (referred to as a battery terminal unit in FIGS. 3 and 5) through which information is transmitted to and received from the electronic device main body 110. Furthermore, the power-receiving unit 121 may include a power-receiving coil 121a.

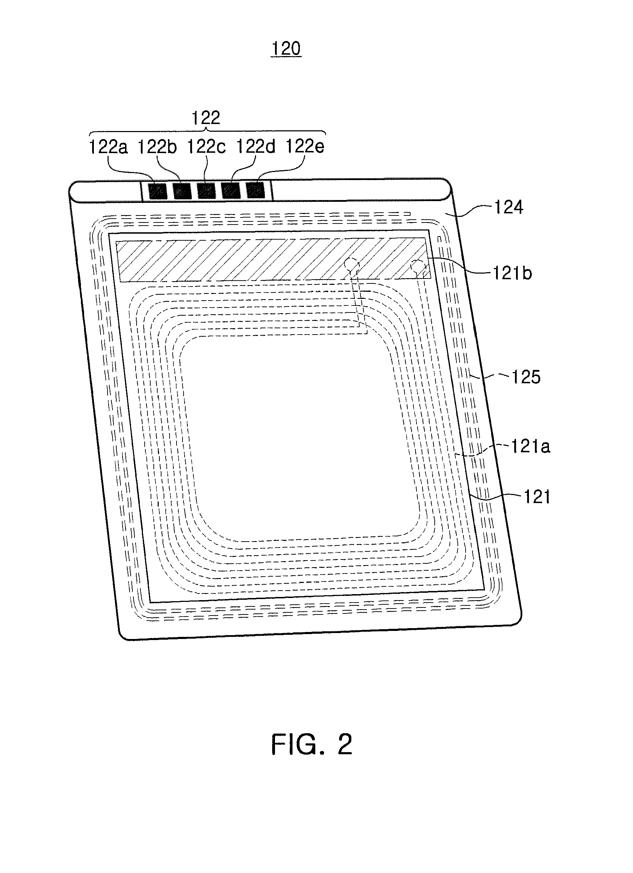

FIG. 2 is a schematic configuration diagram of the battery package according to the exemplary embodiment of the present disclosure.

Describing in more detail the battery package 120 illustrated in FIG. 1 with reference to FIG. 2, the battery package 120 according to the exemplary embodiment of the present disclosure may include the power-receiving unit 121, the terminal unit 122, a battery cell 124, and a near field communication (NFC) antenna 125.

The power-receiving unit 121 may include the power-receiving coil 121a receiving power by a contactless scheme, and a power-receiving circuit 121b appropriately converting the power received by the power-receiving coil 121a into power chargeable in the battery cell 124.

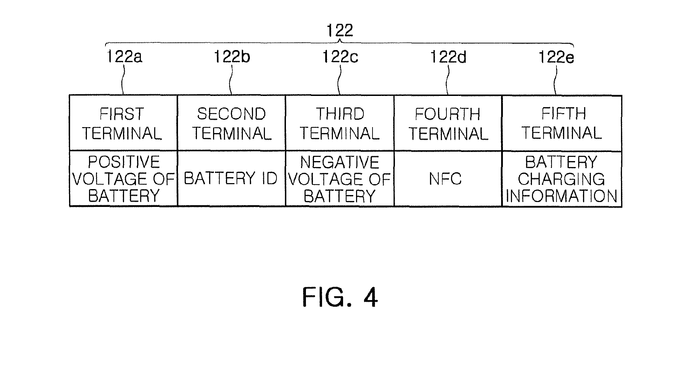

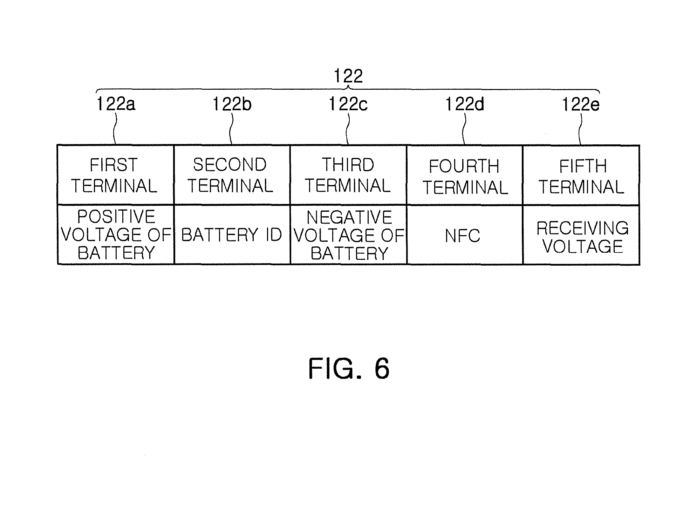

The terminal unit 122 may include a first terminal 122a, a second terminal 122b, a third terminal 122c, a fourth terminal 122d, and a fifth terminal 122e, and may be electrically connected to the power-receiving circuit 121b, the battery cell 124, the NFC antenna 125, and the like to transmit and receive information to and from the electronic device main body 110. This will be described in more detail with reference to FIGS. 4 and 6.

Meanwhile, the battery cell 124 may be charged with the power from the power-receiving circuit 121b, and the NFC antenna 125 may transmit and receive a preset signal to and from the outside to perform near field communications and may be formed around the power-receiving coil 121a to minimize a volume of the battery package 120, and may be formed around a circumference of the battery package 120.

More specifically, the NFC antenna 125 having the number of turns appropriate for the near field communications may be formed on one surface of the battery package around the circumference of the battery package 120 and a central area of the NFC antenna 125 may be provided with the power-receiving coil 121a having the number of turns appropriate to receive power from the outside by the contactless scheme.

FIG. 3 is a schematic block diagram of the electronic device and the battery package according to the exemplary embodiment of the present disclosure and FIG. 4 is a diagram illustrating the configuration of the terminal unit of the battery package according to the exemplary embodiment of the present disclosure.

Referring to FIG. 3, in the electronic device and the battery package according to this exemplary embodiment of the present disclosure, a control unit 112 may transmit and receive the information to and from the battery package 120 through an electronic device terminal unit 111.

The battery terminal unit 122 may be electrically connected to the electronic device terminal unit 111 and may transmit and receive the information.

Referring to FIGS. 3 and 4, the battery terminal unit 122 may include the first to fifth terminals 122a, 122b, 122c, 122d, and 122e, in which the first terminal 122a and the third terminal 122c may output voltage information of the battery cell 124.

The first terminal 122a may be a positive (+) voltage terminal and the third terminal 122c may be a negative (-) voltage terminal.

The second terminal 122b may output battery identification (ID) information. That is, the second terminal 122b may be a battery ID terminal outputting electrical characteristics information of the battery package.

The electrical characteristics information of the battery package may include, for example, battery capacity, appropriate charging current, appropriate charging voltage, and the like.

The fourth terminal 122d may be connected to the NFC antenna to transmit and receive information through near field communications, and the fourth terminal 122d may be an NFC terminal.

The fifth terminal 122e may output power status information related to the power received by the power-receiving unit 121, and the power status information may be charging status information from a charging control unit 123.

Generally, in a case of inputting and outputting data, a positive (+) terminal and a negative (-) terminal are required. In inputting and outputting the power status information, the positive (+) voltage terminal may be the fifth terminal 122e and the negative (-) voltage terminal may be the third terminal 122c. That is, the third terminal 122c may share a ground with the negative (-) voltage terminal.

As illustrated in FIG. 3, the battery package 120 may include the charging control unit 123, and the charging control unit 123 may be electrically connected to the power-receiving circuit 121b of the power-receiving unit 121.

The power received by the power-receiving coil 121a may be converted into power appropriate to be charged in the battery cell via the power-receiving circuit 121b, and the charging control unit 123 may be disposed between the power-receiving circuit 121b and the battery cell 124 to adjust the power to be delivered from the power-receiving circuit 121b to the battery cell 124, to control the power charging of the battery cell.

The control unit 112 may receive the charging status information from the charging control unit 123 to perform a set operation. For example, the control unit 112 may perform a control operation of displaying the charging status information on a screen of the electronic device main body 110.

FIG. 5 is a schematic block diagram of an electronic device and a battery package according to another exemplary embodiment of the present disclosure and FIG. 6 is a diagram illustrating the configuration of a terminal unit of the battery package according to the exemplary embodiment of the present disclosure.

Referring to FIG. 5, in the electronic device and the battery package according to this exemplary embodiment of the present disclosure, the control unit 112 may transmit and receive information to and from the battery package 120 through the electronic device terminal unit 111, and the battery terminal unit 122 may be electrically connected to the electronic device terminal unit 111 to transmit and receive the information.

To this end, referring to FIGS. 5 and 6, the battery terminal unit 122 may include the first to fifth terminals 122a, 122b, 122c, 122d, and 122e, in which the first terminal 122a and the third terminal 122c may output voltage information of the battery cell 124.

Therefore, the first terminal 122a may be a positive (+) voltage terminal and the third terminal 122c may be a negative (-) voltage terminal.

The second terminal 122b may output battery ID information. That is, the second terminal 122b may be a battery ID terminal outputting electrical characteristics information of the battery package.

The fourth terminal 122d may be connected to the NFC antenna to transmit and receive information through near field communications, and the fourth terminal 122d may be an NFC terminal.

The fifth terminal 122e may output power status information related to the power received by the power-receiving unit 121, and the power status information may refer to a voltage received by the power-receiving unit 121.

Generally, in a case of inputting and outputting data, a positive (+) terminal and a negative (-) terminal are required. In inputting and outputting the power status information, the positive (+) voltage terminal may be the fifth terminal 122e and the negative (-) voltage terminal may be the third terminal 122c. That is, the third terminal 122c may share a ground with the negative (-) voltage terminal.

Unlike the embodiment illustrated in FIG. 3, in the electronic device and the battery package according to this exemplary embodiment of the present disclosure as illustrated in FIG. 5, the control unit 112 of the electronic device main body 110 may control the power-charging of the battery cell.

The power received by the power-receiving coil 121a may be converted into power appropriate to be charged in the battery cell via the power-receiving circuit 121b, and the control unit 112 of the electronic device main body 110 may control the power-charging of the battery cell by adjusting the power to be delivered from the power-receiving circuit 121b to the battery cell 124, based on information related to the voltage charged in the battery cell 124 and information related to the voltage received by the power-receiving unit 121.

As set forth above, according to exemplary embodiments of the present disclosure, the battery package may include the power-receiving coil, which may be independently charged with power by the contactless scheme, and the power-charging status may be monitored in real-time by the electronic device main body, based on information related to the power-charging status or power-receiving voltage of the battery package through a connection between the terminal units of the battery package and the electronic device main body.

While exemplary embodiments have been shown and described above, it will be apparent to those skilled in the art that modifications and variations could be made without departing from the scope of the present invention as defined by the appended claims.

## Claims

1. A battery package, comprising:
a power receiving unit receiving power by a contactless scheme;
a battery cell charged with the power delivered from the power receiving unit; and
a terminal unit through which voltage information of the battery cell and power status information related to a status of the power received by the power-receiving unit are input and output.

2. The battery package of claim 1, wherein the terminal unit includes:
a positive (+) voltage terminal and a negative (-) voltage terminal through which the voltage information of the battery cell is output; and
a status information terminal through which the power status information is output.

3. The battery package of claim 2, wherein the status information terminal shares a ground with the negative (-) voltage terminal.

4. The battery package of claim 2, further comprising a near field communication (NFC) antenna performing near field communications, wherein the terminal unit further includes an NFC terminal electrically connected to the NFC antenna to input and output a communication signal.

5. The battery package of claim 2, wherein the terminal unit further includes a battery identification (ID) terminal through which electrical characteristics information is output.

6. The battery package of claim 2, further comprising a charging control unit controlling a charging status of the battery cell, wherein the status information terminal outputs charging status information from the charging control unit.

7. The battery package of claim 2, wherein the status information terminal outputs the power status information related to the status of the power received by the power-receiving unit.

8. An electronic device, comprising:
a battery package including a power-receiving unit receiving power by a contactless scheme and a battery cell charged with the power delivered from the power-receiving unit; and
an electronic device main body receiving power from the battery package to perform a set operation;
wherein the battery package further includes a terminal unit through which voltage information of the battery cell and power status information related to a status of the power received by the power-receiving unit are input to and output from the electronic device main body, and
the electronic device main body further includes an electronic device terminal unit through which the voltage information and the power status information related to the status of the power received by the power-receiving unit are input to and output from the battery terminal unit.

9. The electronic device of claim 8, wherein the battery terminal unit includes:
a positive (+) voltage terminal and a negative (-) voltage terminal through which the voltage information of the battery cell is output; and
a status information terminal through which the power status information is output.

10. The electronic device of claim 9, wherein the status information terminal shares a ground with the negative (-) voltage terminal.

11. The electronic device of claim 9, wherein the battery package further includes a near field communication (NFC) antenna performing near field communications, and the battery terminal unit further includes an NFC terminal electrically connected to the NFC antenna to input and output a communication signal.

12. The electronic device of claim 9, wherein the battery terminal unit further includes a battery identification (ID) terminal through which electrical characteristics information of the battery package is output.

13. The electronic device of claim 9, wherein the battery package further includes a charging control unit controlling a charging status of the battery cell, and the status information terminal outputs charging status information from the charging control unit;
wherein the electronic device main body further includes a control unit receiving the charging status information to perform a set control operation.

14. The electronic device of claim 9, wherein the status information terminal outputs the power status information related to the status of the power received by the power-receiving unit.

15. The electronic device of claim 14, wherein the electronic device main body further includes a control unit receiving the power status information to control a charging status of the battery cell.
